# EUROPÄISCHE PATENTSCHRIFT

(11) **EP 1 069 252 B1**
(45) Veröffentlichungstag und Bekanntmachung des Hinweises auf die Patenterteilung: **17.12.2003**
(21) Anmeldenummer: 99113829.8
(22) Anmeldetag: 15.07.1999
(51) Int. Cl.: E03F 5/10, G05D 7/01

(54) **Abflussmengenregelvorrichtung für Regenrückhaltebecken**
Flow regulating device for rainwater retention basin
Dispoitif de contrôle de débit pour réservoir de retenue des eaux pluviales

(43) Veröffentlichungstag der Anmeldung: 17.01.2001
(73) Patentinhaber: Bionik GmbH - Innovative Technik für die Umwelt, 65232 Taunusstein (DE)
(72) Erfinder: Richter, Michael, 65527 Niedernhausen (DE)
(74) Vertreter: Patentanwälte Möll und Bitterich

(56) Entgegenhaltungen:
- EP-A- 0 458 224
- DE-A- 3 914 702
- FR-A- 2 518 144

## Beschreibung

Die Erfindung betrifft eine Abflußmengenregelvorrichtung für Regenrückhaftebecken oder dergleichen gemäß dem Oberbegriff des Patentanspruchs 1.

In Kanalisationssystemen, insbesondere in Mischwasserkanälen, werden zur Verminderung des Zutaufs zur Kläranlage bei Regen sowie zur Speicherung und auch zur Klärung des Regenabflusses vor Einleitung des Regenwassers in den Vorfluter Regenentlastungen angeordnet. Zu den Regenentlastungen gehören neben einfachen Regenüberläufen vor allem Regenrückhaltebecken, Regenüberlaufbecken bzw. Kanalstauräume mit Entlastung und Regenwasserklärbecken. Regenrückhaltebecken beispielsweise speichern die großen Wassermengen, die bei starken Regenereignissen plötzlich abfließen, und geben sie langsam und gedrosselt wieder ab, um die nachgeordneten Kläranlagen nicht zu überlasten.

Ein besonderes Problem bei Bau und Betrieb solcher Regenentlastungen liegt in der Begrenzung des Abflusses, wofür verschiedene Arten von Drosselanlagen bekannt sind. Durch solche Drosselanlagen muß gewährleistet werden, daß auch bei starken Regenfällen der Wasserabfluss zur Kläranlage möglichst konstant bleibt. Da Regenüberlaufbecken sich bei starken Regenfällen innerhalb weniger Minuten bis zum Überlaufen füllen können, muss die Reaktionszeit der Drosselanlage wesentlich kürzer sein als die Füllzeit des Stauraumes.

Drosselanlagen dieser Art sollen selbsttätig und wartungsfrei, möglichst auch ohne Einsatz von Fremdenergie arbeiten. So gibt es neben den klassischen Drosseleinrichtungen eine Reihe von elektrisch und hydraulisch-mechanisch arbeitenden Drosselorganen. Letztere werden meist im Rückhaltebecken selbst vor der Auslauföffnung angeordnet. Die Bewegung des Drosselorgans, z.B. einer Drosselblende oder eines Drosselschiebers, wird in Abhängigkeit von der Höhe des Flüssigkeitsspiegels durch einen Schwimmer gesteuert, der mittels Übertragungselementen mit dem Drosselorgan bewegungsschlüssig verbunden ist. Diese Bauart hat zwar den Vorteil, daß sie kompakt aufgebaut ist und dass das Drosselorgan unmittelbar auf die Auslauföffnung einwirkt; es besteht aber das Problem, dass die Drosselanlage im Betrieb unter Wasser, also "nass", arbeitet, demgemäß Verschmutzungen und Korrosionserscheinungen stark ausgesetzt ist, und dass Verstopfungen der Auslauföffnung nicht oder nur mit großen Anstrengungen beseitigt werden können.

In diesem Zusammenhang ist es bekannt geworden, in einem Regenrückhaltebecken vor der Abflussöffnung eine Schwimmerkammer anzuordnen, in der eine Abflussmengenregelvorrichtung untergebracht ist (DE 40 16 376 A1). Diese Schwimmerkammer weist eine Zuflussöffnung und eine Abflussöffnung auf, die jeweils durch Drosselorgane ganz oder teilweise verschließbar sind. In der Schwimmerkammer befindet sich ein Schwimmer, der mittels Übertragungselementen mit dem zuflussseitigen Drosselorgan, einem Segmentschütz, verbunden ist. Das abflussseitige Drosselorgan in Form einer senkrecht geführten Drosselblende ist mittels Übertragungselementen mit einem im Regenrückhaltebecken selbst angeordneten Oberwasserschwimmer verbunden. Zu den Übertragungselementen gehören auch Elemente mit Steuerkurven. Auf diese Weise wird mit einem relativ komplizierten Mechanismus auf beide Drosselorgane eingewirkt.

Bei einer ähnlichen Abflussmengenregelvorrichtung ist es auch bekannt, durch einen in einer Schwimmerkammer angeordneten Schwimmer mittels Übertragungselementen zugleich auf beide Drosselorgane einzuwirken, die somit beide parallel in Abhängigkeit von dem durch den Schwimmer abgegriffenen Wasserstand in der Kammer betätigt werden (DE 31 08 440 A1).

Neben einem möglichst einfachen und wartungsfreien Aufbau sowie selbsttätiger Funktion einer derartigen Regelvorrichtung ohne Einsatz von Fremdenergie liegt das Hauptproblem nicht nur darin, eine konstante Regelung, unabhängig vom Oberwasserstau, zu erreichen, sondern auch darin, zu gewährleisten, daß eventuelle Verstopfungen, die bei von starken Regenereignissen mitgeführten Gegenständen oft auftreten, selbsttätig beseitigt werden.

Vor diesem Hintergrund liegt der Erfindung die Aufgabe zugrunde, eine Abflussmengenregelvorrichtung anzugeben, welche die Nachteile der bekannten Vorrichtungen vermeidet.

Gelöst wird diese Aufgabe durch eine Abflussmengenregelvorrichtung der eingangs genannten Art mit den im Anspruch 1 angegebenen Merkmalen.

Vorteilhafte Weiterbildungen ergeben sich aus den Unteransprüchen.

Der wesentliche Vorteil der erfindungsgemäßen Regelvorrichtung liegt in ihrem einfachen Aufbau, vor allem darin, dass der Schwimmer, der die zur Betätigung des Drosselorgans erforderliche Kraft erzeugt, nicht, wie bei bekannten Vorrichtungen, mit vertikaler Bewegungsrichtung angeordnet ist, was zusätzliche Aufwendungen zur Parallelführung seiner Bewegung bedingt, sondern um eine an seinem einen Ende angeordnete horizontale Achse verschwenkbar ist. Damit kann die Auftriebskraft an einem, nämlich an dem der Schwenkachse gegenüberliegenden Ende des Schwimmers konzentriert und über ein nur aus ganz wenigen einfachen Elementen bestehendes Übertragungssystem unmittelbar auf das Drosselorgan übertragen werden.

Von Vorteil ist auch, daß nur die Zuflussöffnung der Schwimmerkammer mit einem regelbaren Drosselorgan versehen zu werden braucht. Die Abflussöffnung kann mit einem einstellbaren Drosselorgan ausgestattet sein, was den Vorteil einer stufenlosen Verstellung der Abflussmenge hat. Die Verstellung erfolgt über eine Spindel; damit besteht neben einer mechanischen Betätigung von der Geländeoberfläche her auch die Möglichkeit zum Einbau von Fernwirktechnik, z.B. durch einen Stellmotor. Dabei kann das abflussseitige Drosselorgan zugleich als Absperrschieber verwendet werden.

Da die erfindungsgemäße Regelvorrichtung nur sehr wenige bewegte Teile hat und auf das zuflussseitige Drosselorgan unmittelbar eingewirkt wird, bilden der Schwimmer und das zuflussseitige Drosselorgan einen Regelkreis, der die Einhaltung einer vertikalen QIH-Linie zur konstanten Regelung des Wasserabflusses, unabhängig vom Oberwasserstau, ermöglicht.

Wesentlich für den einfachen Aufbau der erfindungsgemäßen Regelvorrichtung ist die Leichtgängigkeit des zuflussseitigen Drosselorgans, die durch eine Führung des Schiebers an kugelgelagerten Rollen und Anordnung von Luftkammem zur Verstärkung des Auftriebs erreicht werden kann. Der zweigeteilte Aufbau des abflussseitigen Drosselorgans ermöglicht eine Trennung der für die Einstellung eines Sollabflusswertes erforderlichen Elemente von dem eigentlichen Verschlusselement, so dass dieses im Falle einer Verlegung des Abflussquerschnitts durch eine flexible Zugverbindung mit dem Schwimmer in jedem Falle eine sichere Funktion ohne bewegungsbedingte Reibungs- oder Klemmkräfte gewährleistet.

Die Erfindung wird nachstehend anhand eines in der Zeichnung dargestellten Ausführungsbeispiels näher erläutert. Es zeigt
- Fig. 1: einen Vertikalschnitt durch eine erfindungsgemäße Abflussmengenregelvorrichtung,
- Fig. 2: eine Draufsicht auf die Vorrichtung gemäß Fig. 1 sowie die
Fig. 3 bis 8 Detaildarstellungen aus den Fig. 1 und 2 in größerem Maßstab, nämlich

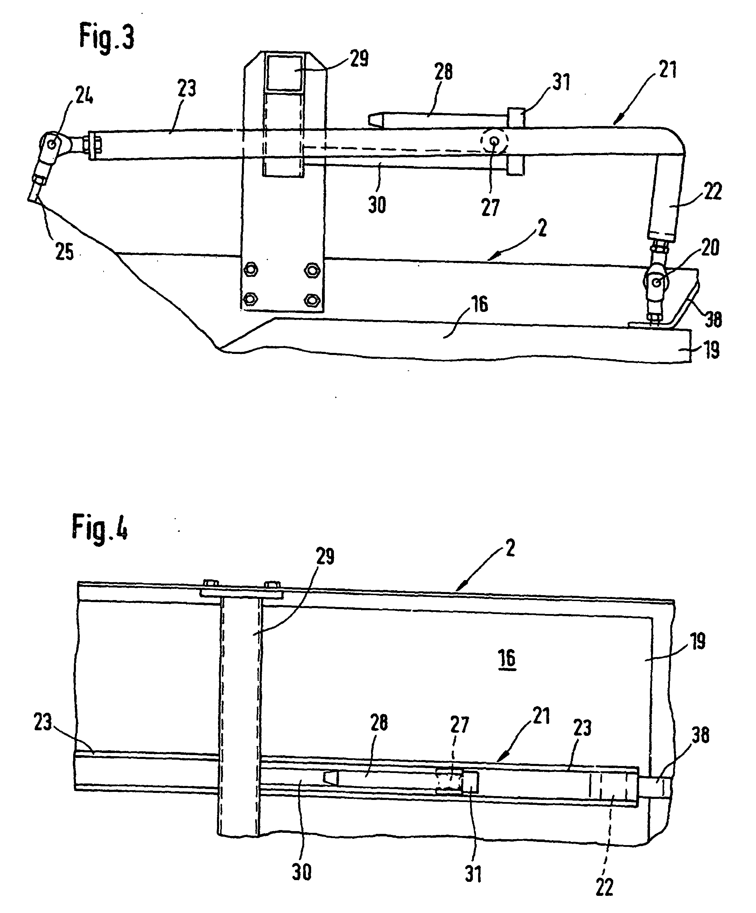

- Fig. 3: Ausbildung und Funktion des Winkelhebels mit Steuerstab in Ansicht und
- Fig. 4: in Draufsicht,

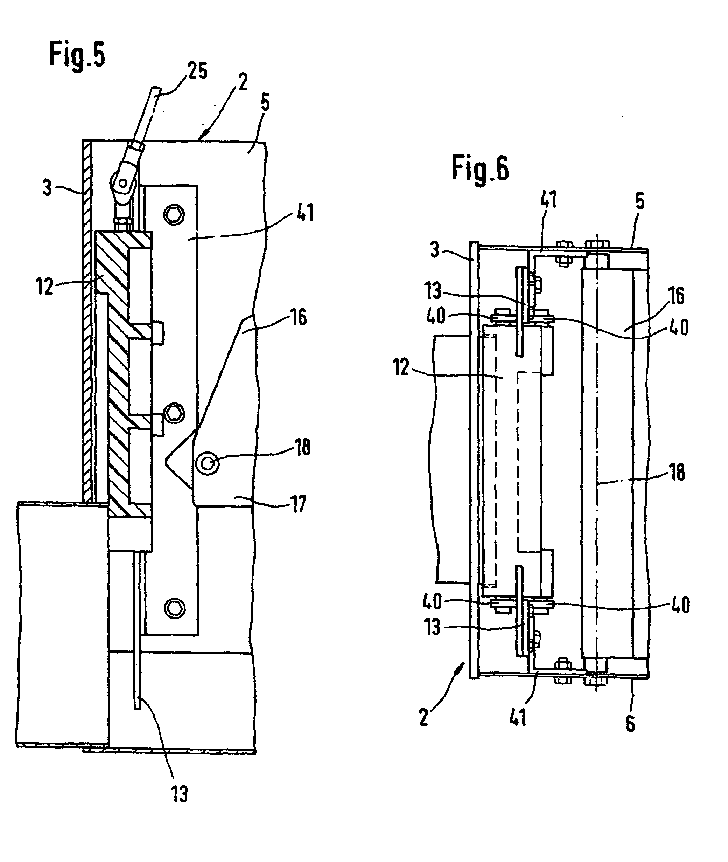

- Fig. 5: das zuflussseitige Drosselorgan im Vertikalschnitt und
- Fig. 6: in Draufsicht sowie

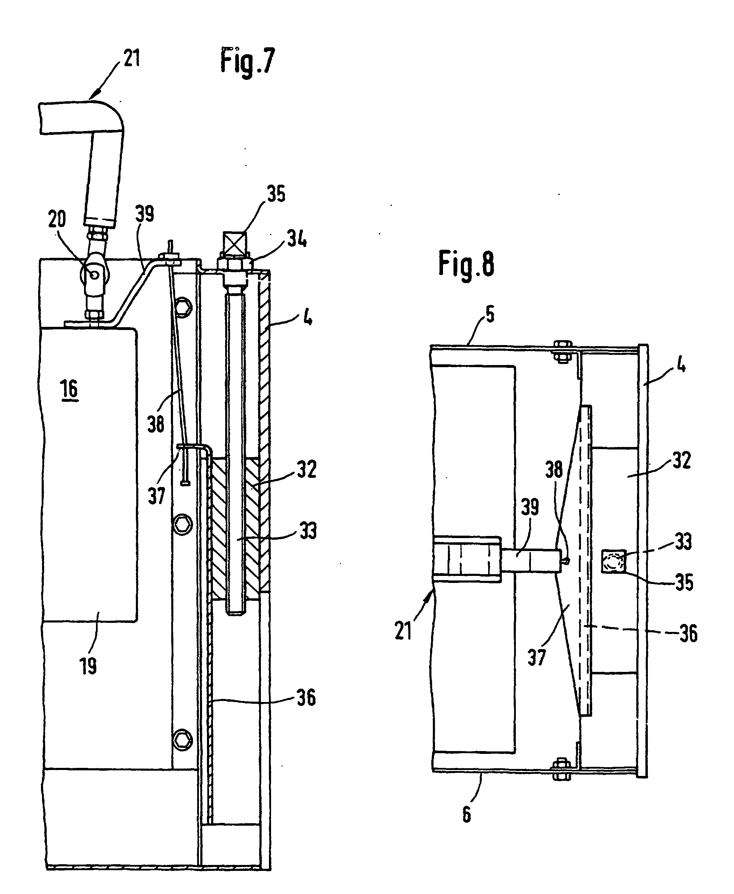

- Fig. 7: das abflussseitige Drosselorgan im Vertikalschnitt und
- Fig. 8: in Draufsicht.

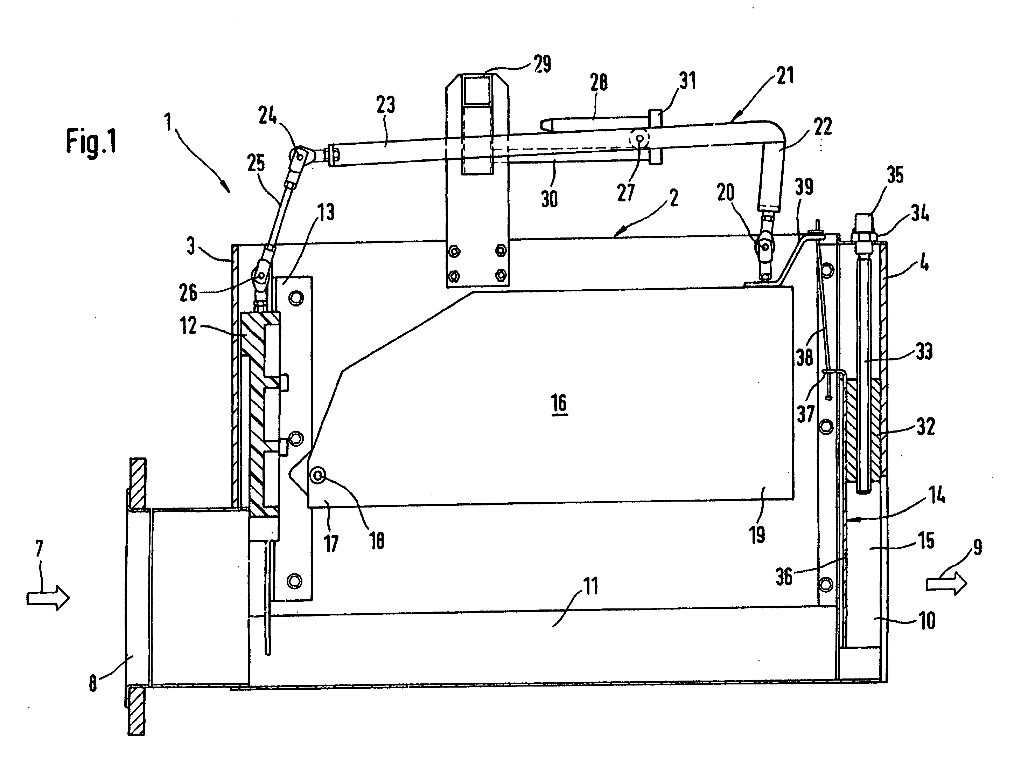

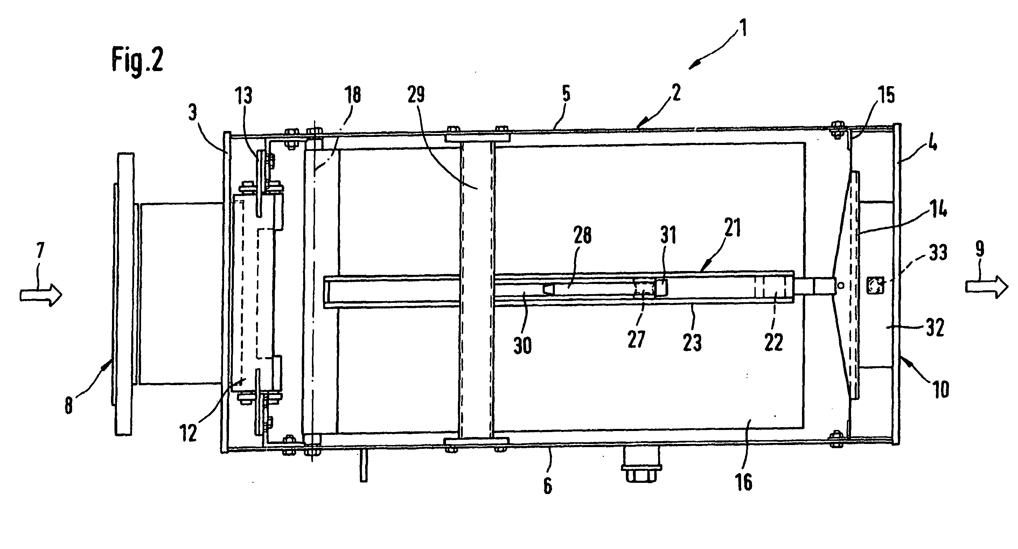

Die erfindungsgemäße Abflussmengenregelvorrichtung, wie sie in den Fig. 1 und 2 in Längsschnitt und Draufsicht dargestellt ist, ist dazu bestimmt und geeignet, in einem, beispielsweise einem Regenrückhaltebecken nachgeordneten Schacht angeordnet zu werden. Dieser Schacht, durch den eine Regenwasserleitung geführt ist, kann rund oder mehreckig, insbesondere rechteckig ausgebildet sein.

Die Abflussmengenregelvorrichtung umfasst eine Schwimmerkammer 1, die von einem Gehäuse 2 umschlossen wird. Das Gehäuse 2 weist zwei Stimwände 3 und 4 sowie zwei Seitenwände 5 und 6 auf. Der Zufluss (Pfeil 7) erfolgt durch eine Zuflussöffnung 8 in der zuflussseitigen Stirnwand 3, der Abfluss (Pfeil 9) durch eine Abflussöffnung 10 in der abflussseitigen Stirnwand 4.

Die erfindungsgemäße Vorrichtung ist sowohl für "trockene" als auch für "nasse" Aufstellung geeignet. Im Beispiel der Fig. 1 und 2 ist eine "trockene" Aufstellung gezeigt, d.h. die durch das Gehäuse 2 umschlossene Schwimmerkammer 1 ist nach oben hin offen. Dennoch kann die Schwimmerkammer 1 durch einen Deckel abgeschlossen werden, um die einzelnen Teile etwa gegen herabfallenden Schmutz zu schützen. Die Schwimmerkammer 1 kann aber auch "nass" in einem Regenrückhaltebecken selbst angeordnet sein. In diesem Fall ist das Gehäuse 2 durch einen Deckel zu schließen; es muss allerdings ein Luftausgleich nach außen erfolgen.

Die Darstellung in Fig. 1 zeigt den Zustand "Trockenwetterabfluss" durch eine Bodenrinne 11. Das Drosselorgan für die Zuflussöffnung 8 ist ein Regelschieber 12, der an der zuflussseitigen Stimwand 3 in einer vertikalen Führung 13 bewegbar ist. Das Drosselorgan für die Abflussöffnung 10 ist ein Sollwertschieber 14, der ebenfalls in einer vertikalen Führung 15 bewegbar ist. Innerhalb der durch das Gehäuse 2 umgrenzten Schwimmerkammer 1 befindet sich ein Schwimmer 16. Der Schwimmer 16 ist an seinem zuflussseitigen Ende 17 um eine horizontale Achse 18 verschwenkbar gelagert. Die Drosselorgane werden weiter unten anhand der Fig. 5 und 6 sowie 7 und 8 näher erläutert.

Wie insbesondere die Fig. 3 und 4 erkennen lassen, ist am abflussseitigen Ende 19 des Schwimmers 16 an seiner Oberseite mittels eines Gelenkes 20 ein Winkelhebel 21 angeschlossen, der aus zwei etwa rechtwinklig zueinander angeordneten Armen besteht, nämlich einem kürzeren, aufrechten Arm 22 und einem längeren, liegenden Arm 23. Das freie Ende des längeren Arms 23 ist mittels eines Gelenkes 24 und eines Gelenkstabes 25 über ein weiteres Gelenk 26 bewegungsschlüssig mit dem oberen Ende des Regelschiebers 12 verbunden.

Der Winkelhebel 21 ist mittels einer an seinem längeren Arm 23 angeordneten Rolle 27 an der Unterseite eines horizontal verlaufenden Stabes 28 abgestützt, die eine Steuerkante bildet. Der Stab 28, der von einer Traverse 29 ausgehend von einem horizontalen Tragarm 30 getragen wird, stellt somit einen Steuerstab dar. Die Verbindung zwischen dem Tragarm 30 und dem Steuerstab 28 wird durch einen Riegel 31 bewirkt, der als Anschlag für die Rolle 27 dient und damit den Schwimmer 16 in der dargestellten Lage fixiert.

Der Sollwertschieber 14 ist, wie vor allem aus Fig. 7 hervorgeht, zweiteilig ausgebildet. Er besteht aus einem Rahmenteil 32, das über eine Gewindebohrung mit einer Spindel 33 zusammenwirkt, die mittels einer Mutter 34 am Gehäuse 2 gelagert ist. An ihrem oberen Ende besitzt die Spindel 33 einen Vierkant 35, so dass durch Drehung der Spindel 33 das Rahmenteil 32 in eine bestimmte Höhenlage gebracht werden kann. Das Rahmenteil 32 besteht zweckmäßig aus Kunststoff; es ist nach Art eines Schiebers ausgebildet und hat in seinem unteren Bereich eine U-förmige Öffnung, die durch ein Verschlussteil 36 ganz oder teilweise verschlossen werden kann. Das Verschlussteil 36 ist ein relativ flaches Blechteil, das an dem Rahmenteil 32 in vertikaler Richtung verschiebbar gelagert ist. Das Verschlussteil 36 besitzt an seinem oberen Ende einen Anschlag 37 mit einer Bohrung, durch die ein flexibles Zugseil 38 geführt ist. Dieses Zugseil 38 führt zu einer Konsole 39, die an der Oberseite des abflussseitigen Endes 19 des Schwimmers 16 befestigt ist.

Der zuflussseitige Regelschieber ist im einzelnen aus den Fig. 5 und 6 erkennbar. Der Körper des Regelschiebers 12 besteht zweckmäßig aus Kunststoff, also aus einem leichten, aber steifen Material, das bei großem Volumen und geringem Eigengewicht zur Verstärkung des Auftriebs beiträgt. Der Schieberkörper ist so unter Wasser praktisch gewichtslos. In entsprechender Weise könnte der Schieber körper aber auch aus Blech bestehen und Luftkammem zur Verstärkung des Auftriebs aufweisen.

Um eine möglichst gute Leichtgängigkeit des Schiebers 12 zu erreichen, ist er mittels Rollen 40 an vertikalen Führungsschienen 13 gehalten, die an jeweils einem Schenkel von Winkeln 41 befestigt sind, die ihrerseits mit dem jeweils anderen Schenkel an den zwei Seitenwänden 5 und 6 des Gehäuses 2 angeschraubt sind.

Die Funktion der erfindungsgemäßen Abflussmengenregelvorrichtung kann wie folgt beschrieben werden.

Während Fig. 1 den Trockenwetterabfluss zeigt, in dem sich die erfindungsgemäße Regelvorrichtung in Ruhe befindet, entsteht bei starkem Wasserzufluss durch die Zuflussöffnung 8 bei konstant gehaltenem Querschnitt der Abflussöffnung 10 in der Schwimmerkammer 1 ein künstlicher Aufstau. Durch diesen Aufstau wird der Schwimmer 16 gehoben und damit um die Schwenkachse 18 verschwenkt. Dabei bewegt sich das Gelenk 20 auf einem Kreisbogen nach oben. Hierdurch wird eine Kraftkomponente erzeugt, die bewirkt, dass der Winkelhebel 21 sich mittels der Rolle 27 an dem Steuerstab 28 entlangbewegt und zugleich um die Achse der Rolle 27 verschwenkt wird. Diese kombinierte Schwenk- und Längsbewegung wird über den Gelenkstab 25 sowie die Gelenke 24 und 26 auf den Regelschieber 12 übertragen, der sich nach unten bewegt und die Zuflussöffnung 8 teilweise verschließt.

Würde der Regelschieber 12 die Zuflussöffnung 8 vollständig verschließen, dann würde das in der Schwimmerkammer 1 befindliche Wasser durch die Abflussöffnung 10 ausströmen. Damit würde der Schwimmer 16 absinken, wodurch sich der Regelschieber 12 öffnet, um wieder neu Wasser einströmen zu lassen; der Regelschieber 12 wird also praktisch nicht ganz geschlossen sein. Es entsteht vielmehr eine Regelung des Zuflusses zur Schwimmerkammer 4, wobei sich die Rolle 27 an der Unterseite des Steuerstabes hin- und herbewegt und sich der Regelschieber 12 in entsprechender Weise auf- und abbewegt.

Tritt bei dieser Regelung durch vom Wasser mitgeführten Schmutz eine Verstopfung der durch den Regelschieber 12 gebildeten Zuflussöffnung 8 auf, dann vermindert sich der Zufluss, bis er gegebenenfalls ganz zum Versiegen kommt. Das durch die Abflussöffnung 10 aus der Schwimmerkammer 1 ausströmende Wasser veranlasst in diesem Falle den Schwimmer 16 zum Sinken. Dadurch hebt sich automatisch der Regelschieber 12, so dass der für die Verlegung des Querschnitts verantwortliche Schmutz abfließen kann. Verlegt der Schmutz jedoch die Abflussöffnung 10 in der Schwimmerkammer 1, dann kann die Regelvorrichtung in folgender Weise funktionieren.

Ist die Abflussöffnung 10 durch angeschwemmten Schmutz verlegt, dann findet das zufließende Wasser keinen Abfluss mehr. Dadurch steigt der Wasserspiegel in der Schwimmerkammer 1 an, so dass der Schwimmer 16 eine weitere Auftriebskraft erfährt. In diesem Falle kommt die Rolle 27 an dem längeren Arm 23 des Winkels 21 an der Spitze des Steuerstabes 28 von diesem frei, so dass sich der Schwimmer 16 unbeeinflusst durch die Anlage der Rolle 27 am Steuerstab 28 heben kann. Bei dieser Hebung spannt sich das Zugseil 37 und nimmt bei weiterer Hebung des Schwimmers 16 das Verschlussteil 36 mit in die Höhe, so dass die Abflussöffnung 10 freigegeben wird, die Verlegung abfließen kann. Folgt der Schwimmer 16 dem danach sinkenden Wasserstand in der Schwimmerkammer 1, dann bewegt sich auch das Verschlussteil 36 wieder nach unten und die Rolle 27 nimmt wieder ihre Lage zur Abstützung des Winkelhebels 21 an dem Steuerstab 28 ein.

## Patentansprüche

1. Abflussmengenregelvorrichtung für Regenrückhaltebecken oder dergleichen, umfassend eine von der Abflussleitung des Regenrückha!tebeckens zu durchsetzende Schwimmerkammer (1) mit Zu- und Abflussöffnungen (8, 10), di e jeweils mittels Drosselorganen (12, 14) der Abflussmengenregelvorrichtung verschließbar sind, und mit einem Schwimmer (16), der mit mindestens einem der Drosselorgane bewegungsschlüssig verbunden ist, **dadurch gekennzeichnet,**
**dass** der Schwimmer (16) an einem Ende (17) um eine zuflussseitig angeordnete horizontale Achse (18) verschwenkbar gelagert ist und dass an dem der Schwenkachse (18) gegenüberliegenden Ende (19) des Schwimmers (16) ein Ende eines zweiarmigen Winkelhebels (21) der Abflussmengenregelvorrichtung angelenkt ist, dessen gegenüberliegendes Ende bewegungsschlüssig mit dem zuflussseitigen Drosselorgan (12) verbunden ist, derart, dass bei steigendem Wasserspiegel in der Schwimmerkammer das Drosselorgan (12) die Zuflussöffnung (8) ganz oder teilwelse verschließt.

2. Abflussmengenregelvorrichtung nach Anspruch 1, **dadurch gekennzeichnet, dass** der Winkelhebel (21) um eine horizontale, an einer Steuerkante der Abflussmengenregelvorrichtung längsverschiebbar geführte Achse verschwenkbar ist.

3. Abflussmengenregelvorrichtung nach Anspruch 2, **dadurch gekennzeichnet, dass** der Winkelhebel (21) zwei etwa rechtwinklig zueinander verlaufende Arme aufweist, von denen der eine, kürzere Arm (22) gelenkig mit dem Schwimmer (16) verbunden und an dem anderen, längeren Arm (23) eine an der Steuerkante anliegende Rolle (27) als Drehachse angeordnet ist.

4. Abflussmengenregelvorrichtung nach Anspruch 3, **dadurch gekennzeichnet, dass** das freie Ende des längeren Armes (23) des Winkelhebels (21) unter Zwischenschaltung eines Gelenkstabes (25) gelenkig mit dem zuflussseitigen Drosselorgan (12) verbunden ist.

5. Abflussmengenregelvorrichtung nach einem der Ansprüche 2 bis 4, **dadurch gekennzeichnet, dass** die Steuerkante einen Steuerstab (28) bildet, der in Richtung der Längsverschiebung des Winkelhebels (21) auskragend an einer Traverse (29) an dem die Schwimmerkammer bildenden Gehäuse (2) angeordnet ist.

6. Abflussmengenregelvorrichtung insbesondere nach Anspruch 1, **dadurch gekennzeichnet, dass** das zuflussseitige Drosselorgan (12) als vertikal geführter Schieber ausgebildet ist.

7. Abflussmengenregelvorrichtung nach Anspruch 6, **dadurch gekennzeichnet, dass** der Schieber (12) mittels kugelgelagerter Rollen (40) an seitlichen, an dem Gehäuse angeordneten Führungsschienen (13) geführt ist.

8. Abflussmengenregelvorrichtung nach Anspruch 6 oder 7, **dadurch gekennzeichnet, dass** der Schieber (12) aus einem Material besteht, das bei ausreichender Steifigkeit ein großes Volumen und ein geringes Eigengewicht aufweist, z.B. Kunststoff.

9. Abflussmengenregelvorrichtung nach einem der Ansprüche 6 bis 8, **dadurch gekennzeichnet, dass** der Schieber Luftkammem aufweist.

10. Abflussmengenregelvorrichtung nach den Ansprüchen 1 bis 9, **dadurch gekennzeichnet, dass** das abflussseitige Drosselorgan (14) als vertikal geführter Schieber ausgebildet ist.

11. Abflussmengenregelvorrichtung nach Anspruch 9, **dadurch gekennzeichnet, dass** der Schieber (14) zur Betätigung mit einer Spindel (33) versehen ist.

12. Abflussmengenregelvorrichtung nach Anspruch 10 oder 11, **dadurch gekennzeichnet, dass** der Schieber (14) aus zwei Teilen besteht, nämlich aus einem mit der Spindel (33) zusammenwirkenden Rahmenteil (32) und einem flachen, diesem gegenüber vertikal verschiebbaren Verschlussteil (36).

13. Abflussmengenregelvorrichtung nach einem der Ansprüche 10 bis 12, **dadurch gekennzeichnet, dass** das Verschlussteil (36) mittels einer flexiblen Zugverbindung (38) mit dem Schwimmer (16) verbunden ist.

14. Abflussmengenregelvorrichtung nach Anspruch 13, **dadurch gekennzeichnet, dass** die Zugverbindung (38) so dimensioniert ist, dass das Verschlussteil (36) bei Gebrauch dann gezogen wird, wenn bei Hebung des Schwimmers (16) infolge Verlegung der Abflussöffnung die Abstützung des Winkelhebels (21) an dem Steuerstab (28) an dessen freiem Ende von diesem frei kommt.

15. Abflussmengenregelvorrichtung nach Anspruch 11, **dadurch gekennzeichnet, dass** zur Betätigung der Spindel (33) ein Gewindetrieb (34) vorgesehen ist.

16. Abflussmengenregelvorrichtung nach Anspruch 11, **dadurch gekennzeichnet, dass** zur Betätigung der Spindel (33) ein Stellmotor vorgesehen ist.

## Claims

1. An outflow regulating device for storm water retention tanks or the like, comprising a float chamber (1) with inflow and outflow openings (8,10) to be traversed by the outflow duct of the storm water retention tank, which outflow openings can be closed by means of respective throttle members (12,14) of the outflow regulating device, and with a float (16) which is connected to at least one of the throttle members for linked movement, **characterised in that** the float (16) is pivotably mounted at one end (17) about a horizontal axis (18) disposed on the inflow side, and **in that** a two-armed elbow lever (21) of the outflow regulating device is articulated to the end (19) of the float (16) situated opposite the pivot axis (18), the opposite end of which elbow lever is connected for linked movement with the throttle member (12) on the inflow side in such a way that with rising water level in the float chamber the throttle member (12) fully or partly closes the inflow opening (8).

2. An outflow regulating device according to Claim 1, **characterised in that** the elbow lever (21) is pivotable about a horizontal axis and is guided longitudinally displaceably on a control edge of the outflow regulating device.

3. An outflow regulating device according to Claim 2, **characterised in that** the elbow lever (21) has two arms extending approximately at right angles to one another, the shorter arm (22) of which is connected in an articulated manner with the float (16) and on the other, longer arm (23) there is disposed a roller (27) bearing against the control edge, as an axis of rotation.

4. An outflow regulating device according to Claim 3, **characterised in that** the free end of the longer arm (23) of the elbow lever (21) is connected in an articulated manner with the throttle member (12) on the inflow side, with the interposition of an articulated rod.

5. An outflow regulating device according to any one of Claims 2 to 4, **characterised in that** the control edge is formed by a control rod (28) which is disposed projecting in the direction of the longitudinal displacement of the elbow lever (21) on a cross-member (29) on the housing (2) forming the float chamber.

6. An outflow regulating device in particular according to Claim 1, **characterised in that** the throttle member (12) on the inflow side is in the form of a vertically guided slide member.

7. An outflow regulating device according to Claim 6, **characterised in that** the slide member (12) is guided by means of ball-bearing mounted rollers (40) on lateral guide rails (13) arranged on the housing.

8. An outflow regulating device according to Claim 6 or 7, **characterised in that** the slide member (12) consists of a material which, with sufficient rigidity, has a large volume and is of low weight, for example plastics material.

9. An outflow regulating device according to any one of Claims 6 to 8, **characterised in that** the slide member has air chambers.

10. An outflow regulating device according to Claims 1 to 9, **characterised in that** the throttle member (14) on the outflow side is in the form of a vertically guided slide member.

11. An outflow regulating device according to Claim 9, **characterised in that** the slide member (14) is provided with a spindle (33) for actuation.

12. An outflow regulating device according to Claim 10 or 11, **characterised in that** the slide member (14) comprises two parts, namely a frame part (32) co-operating with the spindle (33) and a flat closing part (36) vertically displaceable with respect to the latter.

13. An outflow regulating device according to any one of Claims 10 to 12, **characterised in that** the closing part (36) is connected to the float (16) by means of a flexible tension connection (38).

14. An outflow regulating device according to Claim 13, **characterised in that** the tension connection (38) is of such dimensions that, in use, the closing part (36) is pulled when, if the. float (16) rises as a result of a shift in the outflow opening, the supporting action of the elbow lever (21) on the control rod (28) at its free end is released from the latter.

15. An outflow regulating device according to Claim 11, **characterised in that** a threaded drive (34) is provided to actuate the spindle (33).

16. An outflow regulating device according to Claim 11, **characterised in that** a servomotor is provided to actuate the spindle (33).

## Revendications

1. Dispositif de réglage du débit pour des bassins de retenue d'eaux pluviales ou éléments similaires, comprenant une chambre à flotteur (1), à travers laquelle passe la conduite d'évacuation du bassin de retenue des eaux pluviales et comportant des ouvertures d'admission et d'évacuation (8, 10) qui peuvent être fermées chacune par des organes de régulation (12, 14) du dispositif de réglage du débit, et comprenant un flotteur (16) qui est assemblé avec conjugaison de mouvement à l'un au moins des organes de régulation, **caractérisé en ce qu'**une extrémité (17) du flotteur (16) est assemblée de manière pivotante autour d'un axe horizontal (18), agencé du côté admission, et **en ce que** contre l'extrémité (19) du flotteur (16), opposée à l'axe de pivotement (18), est articulée une extrémité d'un levier coudé (21) à deux bras du dispositif de réglage du débit, dont l'extrémité opposée est assemblée avec conjugaison de mouvement à l'organe de régulation (12) du côté admission, de telle sorte que, lorsque le niveau d'eau dans la chambre à flotteur augmente, l'organe de régulation (12) ferme complètement ou partiellement l'ouverture d'admission (8).

2. Dispositif de réglage du débit selon la revendication 1, **caractérisé en ce que** le levier coudé (21) peut pivoter autour d'un axe horizontal mobile dans le sens longitudinal contre un bord de commande du dispositif de réglage du débit.

3. Dispositif de réglage du débit selon la revendication 2, **caractérisé en ce que** le levier coudé ( 21) comporte deux bras approximativement perpendiculaires l'un à l'autre, dont l'un, le bras le plus court (22), est assemblé de manière articulée avec le flotteur (16), et **en ce qu'**un galet (27) formant un axe de rotation en contact avec le bord de commande est agencé contre l'autre bras, à savoir le bras le plus long ( 23) .

4. Dispositif de réglage du débit selon la revendication 3, **caractérisé en ce que** l'extrémité libre du bras le plus long ( 23) du levier coudé (21) est assemblée de manière articulée, par l'intermédiaire d'une tige d'articulation (25), avec l'organe de régulation (12).

5. Dispositif de réglage du débit selon l'une quelconque des revendications 2 à 4, **caractérisé en ce que** le bord de commande comprend une tige de commande (28) qui est agencée, en saillie dans la direction du mouvement longitudinal du levier coudé (21), contre une traverse (29) fixée au niveau du carter (2) formant la chambre à flotteur.

6. Dispositif de réglage du débit selon la revendication 1, **caractérisé en ce que** l'organe de régulation (12) du côté admission est conçu sous la forme d'une vanne guidée verticalement.

7. Dispositif de réglage du débit selon la revendication 6, **caractérisé en ce que** la vanne (12) est guidée au moyen de galets (40) sphériques dans des rails de guidage (13) latéraux, agencés contre le carter.

8. Dispositif de réglage du débit selon la revendication 6 ou 7, **caractérisé en ce que** la vanne (12) est réalisée dans un matériau, tel qu'une matière plastique, qui, avec une rigidité suffisante, possède un grand volume et un faible poids propre.

9. Dispositif de réglage du débit selon l'une quelconque des revendications 6 à 8, **caractérisé en ce que** la vanne comporte des chambres à air.

10. Dispositif de réglage du débit selon l'une quelconque des revendications 1 à 9, **caractérisé en ce que** l'organe de régulation (14) du côté évacuation est conçu sous la forme d'une vanne guidée verticalement.

11. Dispositif de réglage du débit selon la revendication 9, **caractérisé en ce que**, la vanne (14)est actionnée au moyen d'une broche (33).

12. Dispositif de réglage du débit selon la revendication 10 ou 11, **caractérisé en ce que** la vanne ( 14) est formée en deux parties, à savoir un élément de cadre (32) coopérant avec la broche (33), et un élément de fermeture (36) plat, mobile verticalement par rapport audit élément de cadre (32).

13. Dispositif de réglage du débit selon l'une quelconque des revendications 10 à 12, **caractérisé en ce que** l'élément de fermeture (36) est assemblé avec le flotteur (16) au moyen d'un assemblage de traction ( 38) flexible.

14. Dispositif de réglage du débit selon la revendication 13, **caractérisé en ce que** l'assemblage de traction (38) est dimensionné de telle sorte que l'élément de fermeture (36), en cas de besoin, est tiré lorsque, en cas de mouvement ascendant du flotteur ( 6) dû à un changement de position de l'ouverture d'évacuation, le levier coudé ( 21) n' est plus en appui contre l'extrémité libre de la tige de commande (28).

15. Dispositif de réglage du débit selon la revendication 11, **caractérisé en ce que**, pour actionner la broche (33), il est prévu un mécanisme fileté (34).

16. Dispositif de réglage du débit selon la revendication 11, **caractérisé en ce que**, pour actionner la broche (33), il est prévu un servomoteur.
